# EUROPEAN PATENT SPECIFICATION

(11) **EP 2 301 661 B1**
(45) Date of publication and mention of the grant of the patent: **07.06.2017**
(21) Application number: 09797754.0
(22) Date of filing: 22.04.2009
(51) Int. Cl.: B01J 23/58, B01D 53/94, B01J 37/02, F01N 3/10, F01N 3/28

(54) **HONEYCOMB CATALYST FOR PURIFYING EXHAUST GAS DISCHARGED FROM AUTOMOBILE, METHOD FOR PRODUCING THE SAME, AND EXHAUST GAS PURIFYING METHOD USING THE CATALYST**
WABENKATALYSATOR ZUR REINIGUNG VON AUTOABGASEN, VERFAHREN ZU SEINER HERSTELLUNG UND ABGASREINIGUNGSVERFAHREN MITHILFE DES KATALYSATORS
CATALYSEUR EN NID D'ABEILLES POUR LA PURIFICATION DU GAZ D'ÉCHAPPEMENT DÉCHARGÉ PAR LES AUTOMOBILES, SON PROCÉDÉ DE FABRICATION ET PROCÉDÉ DE PURIFICATION DE GAZ D'ÉCHAPPEMENT À L'AIDE DU CATALYSEUR

(30) Priority: 17.07.2008 JP 2008185924
(43) Date of publication of application: 30.03.2011
(73) Proprietor: N.E. Chemcat Corporation, Tokyo 105-6124 (JP)
(72) Inventor: NAKAYAMA, Hiroki, Numazu-shi Shizuoka 410-0314 (JP); ENDO, Hiroyuki, Numazu-shi Shizuoka 410-0314 (JP); KUROKAWA, Takahiro, Numazu-shi Shizuoka 410-0314 (JP)
(74) Representative: Müller-Boré & Partner Patentanwälte PartG mbB
(86) International application number: PCT/JP2009/057958
(87) International publication number: WO 2010/007826

(56) References cited:
- WO-A1-90/14888
- JP-A- 63 116 741
- JP-A- 2002 326 033
- JP-A- 2003 047 850
- JP-A- 2003 093 885
- JP-A- 2007 007 496
- US-A1- 2008 044 329
- US-B1- 6 881 384

## Description

The present invention relates to a honeycomb structure-type catalyst for purifying exhaust gas exhausted from an automobile, a method for producing the same and a method for purifying exhaust gas using the same, and a catalyst for purifying exhaust gas, which is a relatively cheap three-way-catalyst containing noble metal components, and is capable of suppressing sintering of the noble metals even at high temperature, and purifying a carbon monoxide (CO), a hydrocarbon (HC) and a nitrogen oxide (NOx), and is superior, in particular, in purifying the nitrogen oxide, a method for producing the same, and a method for purifying exhaust gas.

Conventionally, various components have been used as a catalyst composition, in response to objective thereof, to purify exhaust gas exhausted from an internal combustion engine of an automobile or the like. Among these, platinum group metals to be used as major catalyst components, are supported, in a highly dispersed state, on a heat resistant inorganic oxide with high surface area, such as activated alumina, and converted to catalyst composition slurry together with other catalyst materials to coat on a honeycomb structure-type carrier (refer to Patent Document 1).

As a catalyst for purifying exhaust gas, the platinum group metals such as platinum (Pt), palladium (Pd), rhodium (Rh) are general. Pt and Pd are converted to oxidative active species in many cases, and among them , Pt has particularly high activity, and still exerts high purification performance even after being poisoned or particle growth. Therefore, it has been used as the catalyst for purifying exhaust gas exhausted widely from an internal combustion engine of an automobile or the like. However, because output of Pt is low and market price thereof has been rising in recent years. Therefore, it is studied to reduce use amount thereof, in view of resource protection or a cost aspect.

As a reduction measures of such use amount of Pt, there has been studied to substitute Pt or a part of Pt with Pd. Pt and Pd both are active species having oxidation function, however, Pd is significant in activity decrease accompanied with poisoning by sulfur or the like or particle growth, as compared with Pt. In addition, as compared with Pt, Pd tends to become an alloy when it is used in combination with Rh. In addition, Pd tended to decrease performance caused by particle growth under stringent condition such as high temperature oxidative atmosphere, or by a undesirable interaction with co-catalyst components or poisoning components in exhaust gas. Therefore, Pd has been used in combination with a component aiming at suppressing poisoning, sintering, particle growth, or alloying (refer to Patent Document 2, and Patent Document 3).

In addition, exhaust gas from an automobile contains various reactive components, as well as has high heat, therefore tends to make components of catalyst for purifying exhaust gas sintered and generate poisoning. In the catalyst for purifying exhaust gas, because a major part of purification activity thereof is a noble metal, suppression of poisoning or sintering of the noble metal is an important problem, and various solution methods have been studied.

It has been known that NOx in exhaust gas is an air pollution substance, as well as N2O is greenhouse effect gas promoting global warming. Therefore, by a government agency of each nation, various exhaustion regulations of NOx have been enforced. In purification of such NOx, Rh is used as a catalytically active species, however, Rh is also a material whose alloying is worried in using it together with Pd in the same composition (refer to Patent Document 2). In addition, when Rh is used together with Pt and Pd, which are oxidative active species, in the same catalyst composition, there is also worry of setting off oxidation performance and reduction performance. Therefore, it has been studied to coat Rh and Pt, and Pd on the honeycomb structure-type carrier, as each different catalyst composition.

In the catalyst for purifying exhaust gas, in addition to the above active species, a co-catalyst component selected from an inorganic oxide, such as an oxygen storage component (it may be referred to OSC as well), a barium component (Ba component), a zirconia, a silica, a titania, an alumina, a zeolite, is often used. This OSC absorbs oxygen when oxygen concentration in exhaust gas is high, and discharges oxygen when oxygen concentration in exhaust gas is low. By storage and discharge of oxygen, change of the oxygen concentration in exhaust gas is buffered, and thus the oxygen concentration can be adjusted to the level suitable to purification of exhaust gas.

In a three-way-catalyst (TWC) for purifying exhaust gas exhausted from a gasoline automobile, the catalyst for purifying exhaust gas is usually designed to exert high activity when concentrations of HC, CO, NOx and the like, and concentration of oxygen are in a specific range (which may also be referred to "window") . Buffering of change of oxygen concentration shows an action to maintain such a window region, and serves to purification of toxic components in exhaust gas in high efficiency.

In addition, HC or CO in exhaust gas is oxidized by Pt or Pd, however, when oxygen concentration is low, oxidation promotion of HC or CO is difficult. In such a case, the OSC supplies oxygen into exhaust gas and oxidizes HC or CO, so as to act to promote purification of exhaust gas. Such an action may be said to be a redox reaction, and use of the OSC having high rate of oxygen supply and storage tends to provide easily a catalyst superior in purification capability of HC or CO. As the OSC having high rate of oxygen storage and discharge, a cerium-zirconium-type composite oxide has been known (refer to Patent Document 4). Reason for high rate of oxygen storage and discharge is considered that a crystal structure of the cerium-zirconium-type composite oxide is stable thermally or in oxidation and reduction, by which an action of a cerium oxide, which is a major OSC component, is not obstructed, and can be utilized for an action as the OSC upto the inside of particles. It should be noted that, zirconium is a transition metal and an oxide thereof has oxygen storage and discharge capability, therefore use of a zirconium oxide as the OSC, may be considered, however, capability of the zirconium oxide as the OSC is said not to be expected so well as compared with cerium oxide.

In the catalyst for purifying exhaust gas, a Ba component has been used as a co-catalyst component. The Ba component has function of adsorbing NOx in exhaust gas. That is, in the case where the Ba component is BaCO₃, when NOx concentration in exhaust gas becomes high, BaCO₃ reacts with NOx to become Ba (NO₃)₂. Such a reaction with NOx may be called adsorption of NOx or storage of NOx.

In general, NOx generates in a large quantity, when fuel supplied to an engine is relatively less than amount of air. The Ba component temporary absorbs NOx generating in this way. NOx absorbed by the Ba component is discharged from the Ba component when concentration of NOx in exhaust gas decreases, and CO concentration becomes high. This is derived from a fact that the above-described Ba(NO₃)₂ reacts with CO to become BaCO₃. NOx discharged from the Ba component reacts with HC or other reducing components at the surface of the Rh component to be reductively-purified. Such storage and discharge of NOx by the Ba component may be said to be due to chemical equilibrium of the Ba component.

In addition to such OSC or the Ba component, zirconia or the like is included as a co-catalyst component. Zirconia is said to enhance purification performance of NOx by promotion of a steam reforming reaction. In the TWC, zirconia is considered to promote a steam reforming reaction as follows by using together with the Rh component (refer to Patent Literature 5).

HC+H₂O - - - - -→ COx+H₂ (1)

H₂+NOx - - - -→ N₂+H₂O (2)

Under such circumstances, it has been required to the catalyst for purifying exhaust gas, to exert superior purification performance of exhaust gas enabling to correspond to various regulations, to be cheap, and to be small in reduction of purification performance, even in a long period of use.

US 6,881,384 B1 discloses a catalytic converter for cleaning exhaust gas which comprises a honeycomb structured heat-resistant support and a catalytic coating formed thereon, wherein the catalytic coating includes a first coating layer formed on the heat-resistant support containing a zirconium complex oxide on which Pt and Rh are coexistently carried, and a cerium complex oxide on which Pt and Rh are coexistently carried, and a second layer formed on the first layer containing Pd-carrying alumina or Pd-carrying cerium complex oxide which optionally contains barium sulfate. US 2008/0044329 A1 discloses a layered catalyst composite comprising a carrier; a first layer deposited on the carrier, the first layer comprising palladium deposited on a support; a second layer deposited on the first layer, the second layer comprising rhodium deposited on a support; and a third layer deposited on the second layer, the third layer comprising palladium deposited on a support.

Patent Document 1: JP-A-5-237390
Patent Document 2: JP-A-2002-326033, [0003], [0004]
Patent Document 3: JP-A-2004-223403
Patent Document 4: JP-B-6-75675
Patent Document 5: WO-2000/027508, page 14

In view of the conventional problems, it is an object of the present invention to provide a catalyst for purifying exhaust gas, which is a relatively cheap three-way-catalyst containing noble metal components, and is capable of suppressing sintering of the noble metals even at high temperature, and purifying a carbon monoxide (CO), a hydrocarbon (HC) and a nitrogen oxide (NOx), and is superior, in particular, in purifying the nitrogen oxide, a method for producing the same, along with a method for purifying exhaust gas.

The present inventors have intensively studied a way to solve the problems of conventional technology and found that for the honeycomb-type structure, by arranging the Pd component together with the Ba component and the OSC in the upper layer, and arranging the Rh component supported on a specific cerium-zirconium-type composite oxide in the lower layer, the Pd component and the Rh component become active species for oxidizing HC or CO, and for reducing NOx, respectively, thus exert superior performance as the three way catalyst, and have thus completed the present invention

That is, according to a first aspect of the present invention, there is provided a honeycomb structure-type catalyst having a carrier made of a honeycomb-type structure, coated with a catalyst composition in two layers, for purifying a carbon monoxide, a hydrocarbon and a nitrogen oxide contained in exhaust gas, characterized in that; a catalyst layer (A) at the upper layer side contains a palladium component supported on a heat resistant inorganic oxide, an oxygen storage release material and a barium component, and a catalyst layer (B) at the lower layer side contains a rhodium component supported on a cerium-zirconium-type composite oxide having a cerium/zirconium ratio of weight of 0.05 to 0.2, as converted to cerium oxide CeO₂ and zirconium oxide ZrO₂, wherein the heat resistant inorganic oxide of the catalyst layer (A) at the upper layer side is selected from γ-alumina or γ-alumina added with lanthanum, wherein the oxygen storage release material in the upper layer side (A) is a cerium-zirconium-type composite oxide having higher content of cerium as compared with the lower layer, and
wherein the barium component and the palladium component are not contained in the catalyst layer (B) at the lower layer side, and the rhodium component is not contained in the catalyst layer (A) at the upper layer side.

In addition, according to a second aspect of the present invention, there is provided, in the first aspect, the honeycomb structure-type catalyst characterized in that content of the palladium component is 0.1 to 30 [g/L] per unit volume of the honeycomb-type structure.

In addition, according to a third aspect of the present invention, there is provided, in the first aspect, the honeycomb structure-type catalyst characterized in that content of the barium component is 0.1 to 50 [g/L] per unit volume of the honeycomb-type structure, in an oxide equivalent.

In addition, according to a fourth aspect of the present invention, there is provided, in the first aspect, the honeycomb structure-type catalyst characterized in that in the catalyst layer (B) at the lower layer side, the cerium-zirconium-type composite oxide is contained in 5 to 150 [g/L] per unit volume of the honeycomb-type structure.

In addition, according to a fifth aspect of the present invention, there is provided, in the first aspect, the honeycomb structure-type catalyst characterized in that content of the rhodium component is 0.01 to 5 [g/L] per unit volume of the honeycomb-type structure.

On the other hand, according to a sixth aspect of the present invention, there is provided a method for producing the honeycomb structure-type catalyst according to any one of the first to the fifth aspects, comprising coating the catalyst composition in two layers onto the carrier made of the honeycomb-type structure by the wash coat method, characterized in that the catalyst layer (B) at the lower layer side is formed by coating catalyst composition slurry containing the cerium-zirconium-type composite oxide having a cerium/zirconium ratio by weight of 0.05 to 0.2, as converted to cerium oxide CeO₂ and zirconium oxide ZrO₂, supported with the rhodium component onto the honeycomb-type structure, subsequently the catalyst layer (A) at the upper layer side is formed by coating catalyst composition slurry, containing the heat resistant inorganic oxide supported with the palladium component, the oxygen storage release material and the barium component, onto the honeycomb-type structure, followed by firing.

Still more, according to a seventh aspect of the present invention, there is provided, in the sixth aspect, the method for producing the honeycomb structure-type catalyst, characterized in that the barium component in the catalyst composition slurry is mainly composed of barium sulfate.

On the other hand, according to an eighth aspect of the present invention, there is provided a method for purifying exhaust gas, characterized in that a carbon monoxide, a hydrocarbon and a nitrogen oxide contained in exhaust gas are purified by contacting exhaust gas exhausted from an automobile with the honeycomb structure-type catalyst according to any one of the first to the fifth aspects.

In addition, according to a ninth aspect of the present invention, there is provided, in the eighth aspect, the method for purifying exhaust gas, characterized in that the automobile uses gasoline as fuel.

The honeycomb structure-type catalyst of the present invention uses a palladium (the Pd component) in addition to a rhodium (the Rh component) as catalytically active species, however, the Pd component is relatively cheap and also abundant in resource, as compared with Pt, which is expensive and is feared resource depletion thereof, and combined use with the Ba component enhances dispersion property of Pd. Therefore, it exerts superior performance also for purification of exhaust gas exhausted from a combustion engine using fossil fuel, such as a diesel engine or a gas turbine in addition to a gasoline engine.

This catalyst for purifying exhaust gas, when used for the TWC, is capable of purifying HC or CO in high efficiency not inferior to a catalyst using Pt, as well as exerting superior purification performance of NOx and activity at low temperature, even after being loaded with high temperature by being performed a durability test under heating so as to promote performance decrease of a catalyst.

Figure 1 is a graph showing T50 (°C), when exhaust gas is processed using the catalysts of the present invention, and the comparative catalysts.
Figure 2 is a graph showing purification rates of CO, HC and NOx, when exhaust gas is processed using the catalysts of the present invention, and the comparative catalysts.
Figure 3 is a STEM Photograph of Pd after a durability test of catalyst composition slurry 2 relevant to the present invention.
Figure 4 is a STEM Photograph of Pd after a durability test of catalyst composition slurry 3 used in producing a comparative catalyst.
Figure 5 is a graph showing results of an evaluation test by a FTP mode, when exhaust gas is processed using the catalysts of the present invention, and the comparative catalysts.
Figure 6 is a schematic drawing showing basic catalyst composition of a catalyst of the present invention.
Figure 7 is an explanation drawing showing main reactions supposed in basic catalyst composition of a catalyst of the present invention.

Explanation will be given below in detail on the honeycomb structure-type catalyst of the present invention, mainly on an automotive honeycomb structure-type catalyst, in particular, the TWC for purifying exhaust gas exhausted from a gasoline engine. However, the present invention should not be limited to such TWC application, and is applicable widely for exhaust gas exhausted from an engine using fossil fuel, within a range of the gist of the present invention.

### 1. Noble metal active species

The honeycomb structure-type catalyst of the present invention is composed of two layers of catalyst compositions coated on the honeycomb-type structure, and the Pd component and the Rh component are used as the noble metal active species to oxidize HC or CO, and to reduce NOx, respectively.

In the present invention, the Pd component and the Rh component form each separate catalyst layer, for the honeycomb-type structure. Use of the Pd component and the Rh component in the same composition makes alloying, thus providing fear that both metals thus alloyed decrease activity by cancelling each activity. However, it is considered that by arranging the Rh component and the Pd component in each different layer, each activity of the Rh component and the Pd component can be promoted. The Pd component is arranged in the upper layer and the Rh component is arranged in the lower layer.

### (Pd and a base material thereof)

In the catalyst for purifying exhaust gas, the Pd component or the Rh component is used by being supported on the base material of a heat resistant inorganic oxide. In the present invention, the base material supporting the Pd component is selected as appropriate from alumina. Among these, as the base material of the Pd component, γ-alumina with high specific surface area is preferable because of being superior in heat resistance, and maintaining active species in a highly dispersed state in a long period of use. In addition, in the base material, the OSC in terms of the cerium-zirconium-type composite oxide having higher content of cerium as compared with the lower layer is contained. By containing the OSC, oxidation activity is enhanced in exhaust gas atmosphere having low concentration of oxygen and high concentration of HC or CO.

### (Rh and a base material thereof (OSC))

The Rh component is supported on the cerium-zirconium-type composite oxide containing a large amount of zirconium component. Ratio of the Rh component and the Pd component is preferably the Rh component : the Pd component = 1:5 to 1:30, and more preferably 1:3 to 1:20, in ratio by weight, as converted to a metal. The honeycomb structure-type catalyst of the present invention purifies HC, CO and NOx by actions of both of the Pd component and the Rh component, and when it is in such a composition range, excellent purification performance of HC, CO and NOx is exerted.

In the present invention, the Rh component and the Pd component are used in a multi-layered catalyst in two layers. In the multi-layered catalyst, the upper layer has more opportunities to contact with exhaust gas as compared with the lower layer. Therefore, the upper layer tends to exert high purification activity. However, the upper layer is exposed to reactive gas such as HC, CO, NOx. In addition, the upper layer is exposed to exhaust gas at high temperature, and may generate sintering or particle growth of metal components in some cases. The metal components with particle growth decreases surface area, and decreases activity as a catalyst. In order to compensate decrease in catalytic activity caused by such particle growth, it is necessary to use a large quantity of the metal components so as to have sufficient surface area, even after particle growth. In this case, if a metal component is Pd, it can be used in a large quantity because of being relatively cheap, and by use in a large quantity, a catalyst layer exerting sufficient purification performance can be obtained, even when Pd particles grow and thus surface area decreases.

To such a Pd component, Rh has been known as an active species with high activity. Therefore, it is capable of exerting activity even by small amount, as long as particle diameter is small and a dispersion state is good. However, Rh is scarce in resource amount as well as expensive as compared with Pd. Therefore, it is desired a state which enables to maintain a high dispersion state. In the present invention, the Rh component is used in a catalyst layer at the lower layer having less opportunity of direct exposure to reactive components or high temperature gas.

That is, in the present invention, cheap Pd is used in a large quantity in the upper layer which tends to be sintered easily, so as to exert sufficient activity as the catalyst layer even when particles thereof grow, while expensive Rh is put in the lower layer which is difficult to be sintered, so as to maintain a good dispersion state thereof, prevent particle growth and maintain activity. This is particularly effective, in the TWC to be used in the case when exhaust gas temperature is high.

It should be noted that, in the upper layer of the catalyst of the present invention, effect can be exerted by using only the Pd component, however, the Pt component may be added in an auxiliary object.

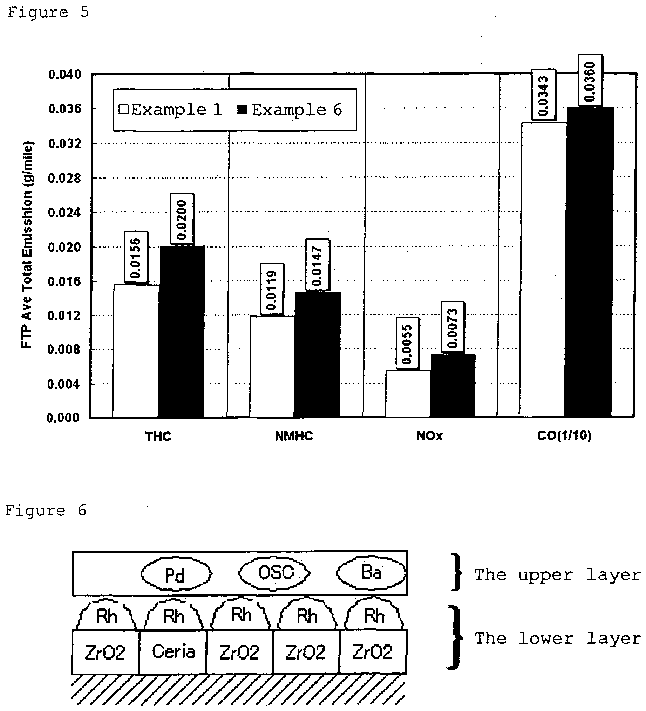

Fundamental catalyst composition of the honeycomb structure-type catalyst of the present invention can be shown schematically in Figure 6. In Figure 6, "Ba" represents the Ba component, "OSC" represents the oxygen storage component to be used in the upper layer, and "Pd" represents the Pd component. And, "Rh" in the lower layer represents the Rh component, and "Rh" is supported on the OSC component. The OSC supporting "Rh" is the cerium-zirconium-type composite oxide, and is one having more amount of the zirconium component as compared with the cerium component. "Rh" is supported on both of a cerium oxide and a zirconium oxide in the OSC. The cerium oxide in the cerium-zirconium-type composite oxide changes from CeO₂ to Ce₂O₃ accompanying with storage and discharge of oxygen, and was represented as "Ceria" in Figure 6, and a zirconium oxide in the cerium-zirconium-type composite oxide was represented as "ZrO₂".

It should be noted that, the schematic drawing represents reactions with fundamental components, and it is without saying that in a practical catalyst, other co-catalyst material, binder material and base material may be used together in some cases, as needed.

### 2. The catalyst layer at the upper layer side (A)

In the upper layer of the honeycomb structure-type catalyst of the present invention, the base material of the heat resistant inorganic oxide supporting the Pd component, the Ba component and OSC are included.

### (The base material of the heat resistant inorganic oxide)

The base material where the Pd component is supported is not especially limited as long as it is porous and superior in heat resistance, and selected from γ-alumina.

γ-alumina has high heat resistance, is porous and has high specific surface area, and is superior in dispersing property of the Pd component. And, in the case of γ-alumina, it is preferable that lanthanum is added. γ-alumina added with lanthanum is superior in heat resistance, and has been known that when a noble metal component is supported, it enables to maintain high catalytic activity even at high temperature (JP-A-2004-290827). Specific surface area value (measured by a BET method; the same hereafter) of such γ-alumina, or γ-alumina added with lanthanum is preferably 80 to 250 m²/g, and further one having 200 to 250 m²/g is more preferable. When the specific surface area of γ-alumina is equal to or lower than 250 m²/g, a catalyst with high heat resistance can be obtained. In addition, when the specific surface area is equal to or higher than 80 m²/g, a noble metal component can be stabilized in a highly dispersed state.

As such a base material, in addition to a porous inorganic oxide, ceria or the cerium-zirconium-type composite oxide can also be used. The cerium-zirconium-type composite oxide can also be combined with a heat resistant inorganic oxide such as γ-alumina. When γ-alumina and the cerium-zirconium-type composite oxide are used in combination, heat resistance and high dispersing property by γ-alumina, and OSC performance of the cerium-zirconium-type composite oxide can be exerted together, and activity of the Pd component enhances. In addition, because γ-alumina exerts effect as a binder as well, when a catalyst component is coated on the honeycomb-type structure, it can prevent peeling of the catalyst component as well.

Amount of the heat resistant inorganic oxide is set 5 to 150 [g/L], and more preferably 20 to 60 [g/L]. The too much amount results in a thick catalyst layer in the honeycomb-type structure, and may narrow cross-section of a through-hole of a honeycomb, which increases back pressure and may incur decrease in output in some cases. In addition, the too low amount may deteriorate a dispersion state of the Pd component, and may incur decrease in catalyst activity.

### (The oxygen storage component)

The oxygen storage component is one having function of oxygen storage and discharge, and is a cerium-zirconium-type composite oxide having higher content of cerium as compared with the lower layer. By containing the OSC, purification performance of HC or CO enhances. As the cerium-zirconium-type composite oxide having higher content of cerium as compared with the lower layer, one having a cerium/zirconium ratio of about 1:1 as converted to an oxide, is preferable. By using the OSC with high cerium amount in this way, it is possible to quickly perform oxygen storage and discharge in the upper layer, and promote oxidation of HC or CO in the Pd component. Such a cerium-zirconium-type composite oxide may be one added with an alkali metal, an alkaline earth metal, a transition metal, a rare earth element other than cerium, as needed.

The cerium-zirconium-type composite oxide is not especially limited, and a cerium-zirconium-type composite oxide available on the market can be used widely. In addition, a production method for the cerium-zirconium-type composite oxide is not especially limited, and it is obtained, generally, by mixing and firing cerium raw materials and zirconium raw materials. Such cerium raw materials are not especially limited, and various cerium salts such as nitrate, carbonate, sulfate, acetate, chloride, bromide, or cerium oxide can be used. In addition, zirconium raw materials are also not especially limited, and various zirconium salts such as nitrate, carbonate, sulfate, acetate, chloride, bromide, or zirconium oxide, baddeleiyite, silica-removed-zirconia or the like may be used.

When the cerium-zirconium-type composite oxide is used as the oxygen storage component, amount thereof is preferably 1 to 150 [g/L], and more preferably 5 to 30 [g/L] as content [g/L] per unit volume of the honeycomb-type structure, in an oxide equivalent. The too much amount of the cerium-zirconium-type composite oxide results in generating new NOx at the catalyst surface in some cases, when temperature of the catalyst is high. Reason for that is not certain, however, it is considered that the cerium-zirconium-type composite oxide has the action of supplying oxygen, and activity of the cerium-zirconium-type composite oxide increase at high temperature. In addition, the cerium-zirconium-type composite oxide oxidizes catalytically active species, in a highly active state, and could result in decreasing activity thereof as well.

### (The Pd component)

A noble metal component contained in the upper layer, as described above, is one containing Pd. The Pd component may be a metal, however, may be one in which a part thereof is oxidized to palladium oxide, by being oxidized in firing during a production process to be described later, or in a purification process of exhaust gas.

Such a Pd component may be decreased in activity by poisoning caused by a poisoning substance such as sulfur, however, Pd is cheap and can be used in quantity sufficient to compensate the decrease in activity. In addition, it has no fear of decrease in activity for exhaust gas from an engine where fuel with low sulfur content is used, and a cheap catalyst with high performance can be obtained. Such fuel with low sulfur content is gasoline, and it is preferable that the catalyst of the present invention is used as the TWC for a gasoline engine. Amount of the noble metal component may be set as appropriate, however, for the Pd component, it is preferable to be 0.1 to 30 [g/L], and more preferably 1 to 7 [g/L] per unit volume of the honeycomb-type structure, in metal Pd equivalent. The too much amount of the Pd component results in proceeding of sintering on the base material, while too less amount cannot exert effect.

### (The Ba component)

In the catalyst of the present invention, the Ba component is contained together with the Pd component in the upper layer. The Ba component, which is an alkaline earth metal, has been known as a NOx storage component, however, it has also been known that presence with the Rh component in the same composition decreases purification performance of NOx (JP-A-2002-326033, [0013]). Reason for such decrease in purification performance of NOx is not certain, however, it is considered to be caused by obstruction of purification performance of NOx in the Rh component, because the alkaline earth metal component has an action of storing NOx. Therefore, purification of NOx by the Rh component may not be promoted in some cases, even when the Ba component, which is the alkaline earth metal component, is contained only in the lower layer containing the Rh component.

As the Ba component, barium carbonate or the like is included. In an oxygen rich (lean) state, NOx is stored by the Ba component by being converted to barium nitrate, while in an oxygen poor (rich) state, NOx stored is discharged by being converted from barium nitrate to barium carbonate. In atmosphere where NOx is discharged in this way, HC or CO, which is a reducing component, is contained abundantly in exhaust gas. NOx discharged is purified by the Rh component, by utilizing HC, CO, or hydrogen generated by the steam reforming reaction.

The Ba component is present as barium oxide in the honeycomb structure-type catalyst in many cases, however, in producing the catalyst composition slurry, it may be added in a form of other barium salts such as barium sulfate, barium carbonate, barium nitrate and the like, or may be a composite oxide containing barium oxide, barium sulfate, barium carbonate, and barium nitrate. Among these, use of barium sulfate decreases viscosity of the catalyst composition slurry and may enhance coating properties in wash coat in some cases. The honeycomb structure-type carrier has an assembled form of many through holes, and high viscosity slurry makes difficult coating of the catalyst composition slurry into these through holes. The fact that use of barium sulfate decreases viscosity of the slurry means easiness of the addition of not only the Ba component but also a large quantity of catalyst components to the slurry, and makes easy production of the honeycomb structure-type catalyst with high coating amount of the catalyst and high activity.

In the present invention, use of the Ba component and the Pd component in the same composition enhances activity as the catalyst. The reason is considered to be suppression of sintering of the Pd component by the Ba component. By suppression of sintering of the Pd component, the Pd component can maintain large surface area, and a catalyst with high activity can be obtained.

Amount of the barium component is preferably 0.1 to 50 [g/L], and more preferably 1 to 30 [g/L] per unit volume of the honeycomb-type structure, in an oxide equivalent. The barium component exerts effect even in small amount, however, enhancement of effect comparable to use amount may not be desired, when use amount increases to equal mole number as Pd.

### 3. The catalyst layer at the lower layer side (B)

The honeycomb structure-type catalyst of the present invention includes the cerium-zirconium-type composite oxide having a large amount of the zirconium component supported the Rh component in the lower layer. In this case, the Rh component is supported mainly at the surface layer part of the cerium-zirconium-type composite oxide. The Rh component may be present in a metal Rh form, however, may be one in which a part thereof is oxidized to rhodium oxide, by being oxidized in firing during a production process to be described later, or in a purification process of exhaust gas.

Amount of the Rh component is 0.01 to 5 [g/L], and preferably 0.1 to 1 [g/L] per unit volume of the honeycomb-type structure, in metal Rh equivalent. The too much amount of the Rh component results in proceeding of sintering on the base material, while too less amount cannot exert sufficiently the purification effect of NOX.

Here, when the Rh component is supported on the zirconium oxide like Rh / [ZrO₂], the Rh component is present in an active state as metal Rh. In addition, in Rh / [ZrO₂], purification of NOx is promoted by the steam reforming reaction. Therefore, it is desirable that the OSC of the base material of the Rh component is rich in the zirconium component.

Here, the cerium-zirconium-type composite oxide supporting the Rh component is 0.05 to 0.2, and preferably 0.05 to 0.1 in ratio by weight [CeO₂ / ZrO₂], as converted to cerium oxide and zirconium oxide. Too less amount of CeO₂ may decrease the oxidation activity of HC, CO, and too much amount may decrease the purification performance of NOX. To this cerium-zirconium-type composite oxide supporting the Rh component, an alkali metal, an alkaline earth metal, a rare earth metal, a transition metal or the like may be added as well in addition to cerium and zirconium.

The cerium-zirconium-type composite oxide is not especially limited, similarly as the upper layer, and a cerium-zirconium-type composite oxide available on the market may be used widely. In addition, a production method for the cerium-zirconium-type composite oxide is not especially limited, and it may be obtained, generally, by mixing and firing cerium raw materials and zirconium raw materials. Such cerium raw materials are not especially limited, and various cerium salts such as nitrate, carbonate, sulfate, acetate, chloride, bromide, or cerium oxide may be used. In addition, zirconium raw materials are also not especially limited, and various zirconium salts such as nitrate, carbonate, sulfate, acetate, chloride, bromide, or zirconium oxide, baddeleyite, silica-removed-zirconia or the like may be used.

Use amount of the cerium-zirconium-type composite oxide dispersedly-supported with the Rh component and having more amount of the zirconium component, is 5 to 150 [g/L], and preferably 40 to 80 [g/L] per unit volume of the honeycomb-type structure to be described later. The too less amount of the cerium-zirconium-type composite oxide to be used for dispersed supporting makes distance between Rh particles to be supported near, thus deteriorates a dispersed state, causees sintering of Rh particles themselves to increase particle diameter, and decreases surface area of Rh, resulting in decreasing activity in some cases. On the other hand, the too much amount thickens a catalyst layer in the honeycomb-type structure and narrows cross-section of a through hole of a honeycomb, which increases back pressure and may incur decrease in output in some cases of an internal combustion engine when it is used in the internal combustion engine.

It is desirable that a binder component is contained further in the lower layer. It is because the component containing only the OSC as above may weaken bonding with the honeycomb-type structure to be described later, in some cases.

As a binder component, various alumina such as γ-alumina, silica, zirconia, silica-alumina or the like is included. Among theses, γ-alumina has been known as activated alumina because of having high specific surface area and also high heat resistance, and various kinds of materials are available on the market. In addition, zirconia has been known as a hydrogen generating material, and in the present invention, still more purification of NOx is expected as well.

It should be noted that, such a binder component may be used not only in the lower layer but also in the upper layer, as needed.

The honeycomb structure-type catalyst of the present invention has the upper layer and the lower layer as the minimal configuration unit of the catalyst composition, and it is desirable to adopt such a layer configuration not only in view of work efficiency but also in view of cost. However,
in addition to the upper and the lower two layers, a separate binder layer, a suppression layer to suppress migration of the catalyst components, a coating layer
or the like may be provided as appropriate, between the honeycomb-type structure and the lower layer, or between the lower layer and the upper layer, as well as at still more upper side of the upper layer.

In the upper layer, the lower layer of the present invention, or other layers to be provided, as needed, an oxide of a transition metal such as platinum, silver, copper, nickel, tungsten, vanadium, zirconium, silicon, titanium, tungsten; a rare earth metal such as cerium, lanthanum, neodymium; an alkali metal; an alkaline earth metal such as barium, calcium, other than the above essential components, may also be used as a simple substance or a composite oxide. In addition, various types of zeolites may also be used in combination.

### 4. The honeycomb-type structure

The honeycomb-type structure in the present invention has many through holes extending from one end face towards the other end face.

In addition, in the honeycomb-type structure, from structural characteristics thereof, it has been known a flow-through-type and a wall-flow-type It has been known that the wall-flow-type is used for filtering off solid components such as soot or SOF in exhaust gas, and is used in a diesel particle filter (DPF). The wall-flow-type has one end of the through holes composed of a porous wall sealed alternately, and has an action as a filter for filtering off particulate substances such as soot.

On the other hand, the flow-through-type has a structure having many through holes opening from one free end face towards the other open end face, and has been used widely in an oxidation catalyst, a reduction catalyst and the three way catalyst (TWC) . It is desirable that the present invention is used in the TWC, therefore, it is desirable to be the flow-through-type honeycomb-type structure.

Density of the through hole in such a honeycomb-type structure is expressed by the number of the holes per unit cross-sectional area, and this is also called a cell density. As the cell density of the honeycomb-type structure, one widely used in general may be used, however, about 15.5 to 139.5 cell/cm² (100 to 900 cell/inch²) is preferable, and it is desirable to be about 31 to 93 cell/cm² (200 to 600 cell/inch²). The cell density of over 139.5 cell/cm² (900 cell/inch²) tends to generate clogging by catalyst components or solid components in exhaust gas, while the cell density of below 15.5 cell/cm² (100 cell/inch²) decreases geometric surface area, by which effective use rate of the catalyst is reduced and makes use as an effective catalyst for purifying exhaust gas difficult.

In addition, a thickness of a cell wall composing the honeycomb is preferably 0.05 to 0.3 mm (2 to 12 mil (milliinch)), and more desirably 0.1 to 0.2 mm (4 to 8 mil). The too thin cell wall makes structurally brittle, while too thick cell wall decreases geometric surface area, by which effective use rate of the catalyst is reduced and makes use as an effective catalyst for purifying exhaust gas difficult.

### 5. Catalyst preparation (the wash coat method)

The honeycomb structure-type catalyst of the present invention is produced by preparing catalyst composition slurry containing a catalyst component and a carrier composed of the honeycomb-type structure, and separately coating the predetermined catalyst component in layer like onto the carrier. That is, in the present invention, the catalyst composition slurry is coated onto the honeycomb-type structure by the known wash coat method to produce the honeycomb structure-type catalyst.

Firstly, the honeycomb-type structure side catalyst layer (the lower layer) containing the Rh component, supported on the cerium-zirconium-type composite oxide having a large quantity of the zirconium component, is coated, and a layer (the upper layer) containing a surface layer side catalyst layer containing palladium, OSC and the barium component, supported on the base material of the heat resistant inorganic oxide is coated thereon.

The wash coat method is one for obtaining the honeycomb structure-type catalyst coated with the catalyst composition, by performing drying and firing, after coating the catalyst composition onto the honeycomb-type structure. The catalyst composition slurry is used by adjusting to a viscosity suitable for application. The viscosity is 300 to 2000 CPS, and preferably 500 to 1000 CPS, as a measurement value with a B-type viscometer. The catalyst composition slurry having the viscosity of over 2000 CPS cannot perform coating to the whole inside of the honeycomb-type structure due to high viscosity, in some cases, even when coating to the honeycomb-type structure is tried by the wash coat method. In order to decrease the viscosity of such high viscosity slurry, it is necessary to increase amount of water, however, slurry with increased amount of water decreases amount of the catalyst which can be coated per one time by the wash coat method, and requires multiple times of wash coats to coat amount of the catalyst necessary to form one kind of the catalyst composition layer. It is not preferable to perform multiple times of wash coats, in view of production efficiency.

In the catalyst preparation relevant to the present invention, influence due to the Ba component raw materials to be used on viscosity increase of the catalyst composition slurry is large. Conventionally used barium acetate and barium hydroxide tends to increase viscosity of the catalyst composition slurry easily. On the other hand, use of BaSO₄ decreases viscosity of the catalyst composition slurry. By using BaSO₄ as the Ba component, it becomes also easy to use catalyst materials which tend to increase viscosity easily, which thus widens options also as for other catalyst materials such as the base material, OSC. In the present invention, it is desirable to select the Ba component, in consideration of viscosity change of the catalyst composition slurry to be used, and coating easiness by the wash coat method.

Drying temperature is preferably 100 to 300°C, and more desirably 100 to 200°C. Firing temperature is preferably 300 to 700°C, and in particular 400 to 600°C is desirable. Heating may be performed by a known heating means such as an electric furnace, a gas furnace.

### 6. The purification method for exhaust gas

The honeycomb structure-type catalyst (catalyst for purifying exhaust gas) of the present invention is used by arranging it in flow of automotive exhaust gas. In arrangement in flow of exhaust gas, the catalyst of the present invention may be arranged alone, may be used in multiple, or may be used in combination with a catalyst having a different action. In addition, when multiple catalysts are used, they may be arranged adjacently, or may be arranged just under an engine and under a chassis floor. The catalyst of the present invention may be used just under an engine and under a chassis floor, or at either thereof.

The honeycomb structure-type catalyst of the present invention can be used in any of a gasoline automobile and a diesel automobile. Exhaust gas exhausted from a gasoline automobile contains HC, CO and NOx, however, effect of the catalyst of the present invention should not be influenced by concentration thereof. Temperature of exhaust gas exhausted from an automotive diesel engine varies in a wide range, and when it is classified to a low temperature region covering from about 150 to 250°C, and a high temperature region covering from about 300 to 600°C, the catalyst of the present invention can exert high denitrification performance in a wide temperature range covering from the low temperature region to the high temperature region.

In recent years, further enhancement of fuel efficiency has become a big problem also in a gasoline automobile. In order to attain enhancement of fuel efficiency, in a gasoline automobile, air / fuel ratio (or A/F) of mixed air supplied to a combustion room is increased, or fuel is cut temporarily in some cases. In this way, fuel in the gasoline engine results in performing lean combustion, and thus increasing generation amount of NOx. The honeycomb structure-type catalyst of the present invention is capable of purifying HC, CO and NOx in high efficiency, and is superior, in particular, in purification performance of NOx, therefore suitable for purification of exhaust gas exhausted from a gasoline automobile with a low fuel efficiency specification.

It should be noted that, also in exhaust gas from a diesel engine or a gas turbine, there may be the case where fuel is supplied into exhaust gas, or combustion is made temporarily in a fuel rich state, or a reducing component is supplied into exhaust gas, for reductive purification of NOx. In such a case, because concentration of HC or CO increases, even in a diesel engine where lean combustion is performed, comprehensive purification capability can be exerted by the honeycomb structure-type catalyst of the present invention.

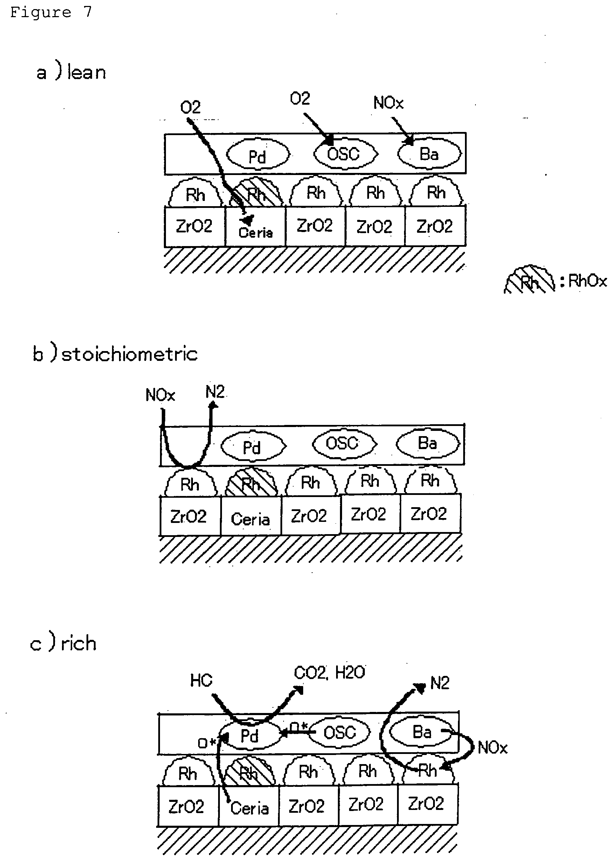

Figure 7 shows main reactions a) to c) supposed in a catalyst schematic drawing (Figure 6). a) "a lean state" is a state of exhaust gas exhausted in lean combustion under large air / fuel ratio in a combustion engine, b) "a stoichiometric state" is a state of exhaust gas exhausted from an engine operated in a state of a theoretical air / fuel ratio of 14.7, and c) "a rich state" is a state of exhaust gas exhausted in rich combustion state under small air / fuel ratio in a combustion engine.

When exhaust gas is in a) a lean state, and in the "Ceria" supported the Rh component, oxygen storage in the "Ceria" is promoted by utilization of adsorption capability of an oxygen atom by the Rh component. In addition, by such adsorption capability of oxygen, there may also be possibility of adsorption of NOx onto the "Ceria". On the other hand, in the b) "stoichiometric state", NOx is purified to N2 by the Rh component supported on ZrO₂. Although not shown in a drawing, a reduction reaction to N₂ is promoted by a hydrogen atom generated by the steam reforming reaction or ZrO₂. The Rh component supported on ZrO₂ has not been oxidized and thus tends to maintain active metal surface easily and exerts high activity as a NOx purification catalyst.

On the contrary, the Rh component supported on the "Ceria" may be oxidized by active oxygen "O*" discharged from the OSC, and may decrease activity as a NOx purification catalyst in some cases. When exhaust gas is in the c) "rich state", oxygen stored in the "Ceria" is discharged quickly via Rh. Oxygen discharged is active oxygen "O*", and is supplied to an oxidation reaction of HC or CO (not shown) in the Pd component. In addition, in the case where NOx was adsorbed onto the "Ceria", it is discharged quickly via the Rh component similarly as oxygen, and supplied to the Rh component Rh / [ZrO₂], having active noble metal surface and purified.

In addition, it has been known that the steam reforming reaction by Rh is promoted under the b) "stoichiometric" atmosphere. The steam reforming reaction is one for generating hydrogen by decomposition of H2O in exhaust gas by an action of the Rh component, and hydrogen generated here promotes reduction of NOx in exhaust gas and decomposes to nitrogen (N₂) and water (H₂O). In this case, when a cerium oxide is present in the catalyst, change of transitional oxygen concentration in the a) "lean" and c) "rich" states is buffered, and the b) "stoichiometric state" is maintained for a long period to promote purification of NOx. In the catalyst of the present invention, purification of HC, CO and NOx is promoted by such an interaction of the upper layer and the lower layer.

### EXAMPLES

Examples and Comparative Examples of the present invention will be shown below, however, the present invention should not be construed restrictive to these Examples.

Catalyst composition slurries 1 to 4 were produced as follows by preparing raw materials of the catalyst compositions, and pulverizing and mixing the slurry with a ball mill.

### = Raw materials of catalyst composition slurry-1 =

- an aqueous solution of rhodium nitrate (metal conversion: 7% by weight:)
- cerium-zirconium-type composite oxide [Ce / Zr (A)] (ratio by weight as converted to an oxide, Ce / Zr = 0.15)
- γ-alumina (specific surface area value: 220 m²/g)
- Water

Rh was supported by an impregnation method using an aqueous solution of rhodium nitrate onto Ce / Zr. After drying this, it was fired at 300°C for 1 hour to obtain Rh supporting Ce / Zr (hereafter may be referred to as Rh / [Ce / Zr (A)]).

Rh / [Ce / Zr (A)] obtained in this way, γ-alumina as a binder and water were pulverized and mixed using a ball mill to obtain catalyst composition slurry-1.

### = Raw materials of catalyst composition slurry-2 =

- an aqueous solution of palladium nitrate (metal conversion: 20% by weight:)
- γ-alumina (specific surface area value: 220 m²/g)
- barium sulfate (BaSO4)
- cerium-zirconium-type composite oxide [Ce / Zr (B)] (ratio by weight as converted to an oxide, Ce / Zr = 1)
- Water

Pd was supported by impregnating an aqueous solution of a Pd salt into γ-alumina and Ce / Zr (B). After drying this, it was fired at 300°C for 1 hour to obtain Pd supporting [γ-alumina / Ce / Zr (B)] (hereafter may be referred to as γ-alumina, Ce / Zr (B)).

Pd / [γ-alumina, Ce / Zr (B)] obtained in this way, BaSO₄ and water were pulverized and mixed using a ball mill to obtain catalyst composition slurry-2.

### = Raw materials of catalyst composition slurry-3 =

- an aqueous solution of palladium nitrate (metal conversion: 20% by weight:)
- γ-alumina (specific surface area value: 220 m²/g)
- Ce / Zr (B)
- Water

Catalyst composition slurry-3 was obtained by similar operation as in catalyst composition slurry-2, except that BaSO₄ was excluded, and γ-alumina of a non base material was added in an amount equivalent to amount of BaSO₄ excluded to adjust catalyst amount.

### = Raw materials of catalyst composition slurry-4 =

- an aqueous solution of rhodium nitrate (metal conversion: 7% by weight:)
- Ce / Zr (A)
- barium sulfate (BaSO4)
- γ-alumina (specific surface area value: 220 m²/g)
- Water

Catalyst composition slurry-4 was obtained by adding BaSO₄ to Rh / [Ce / Zr (A)] of catalyst composition slurry-1, excluding γ-alumina by amount equivalent to BaSO4 added to adjust amount of the catalyst, and adding water to be pulverized and mixed using a ball mill.

### = Raw materials of catalyst composition slurry-5 =

- an aqueous solution of rhodium nitrate (metal conversion: 7% by weight:)
- cerium-zirconium-type composite oxide [Ce / Zr (C)] (ratio by weight as converted to an oxide, Ce / Zr = 0.01)
- γ-alumina (specific surface area value: 220 m²/g)
- Water

Rh was supported by impregnating an aqueous solution of rhodium nitrate into Ce / Zr (C). After drying this, it was fired at 300°C for 1 hour to obtain Rh supporting Ce / Zr (C) (hereafter may be referred to as Rh / [Ce / Zr (C)]).

Rh / [Ce / Zr (C)] obtained in this way, γ-alumina and water were pulverized and mixed using a ball mill to obtain catalyst composition slurry-5.

### = Raw materials of catalyst composition slurry-6 =

* an aqueous solution of rhodium nitrate (metal conversion: 7% by weight:)
* Ce / Zr (B)
* γ-alumina (specific surface area value: 220 m²/g)
* Water

Catalyst composition slurry-6 was obtained by similar operation as in catalyst composition slurry-1, except that Ce / Zr (A) was changed to Ce / Zr (B).

Honeycomb structure-type catalysts with enhanced durability were obtained by heating under the following durability conditions, after laminating the catalyst composition slurries 1 to 6 onto the following honeycomb-type structure by the wash coat method, and drying-firing under the following conditions. Layer conFigureuration (layer) of each honeycomb structure-type catalyst and composition of each component are shown in Table 1. Numerals shown in a parenthesis in Table 1 represents amount of the component [g/L] per unit volume of each catalyst component, and amounts of the Pd component and the Rh component are values as converted to a metal.

It should be noted that, in producing the catalyst composition slurry 2 of the present invention, BaSO₄ was used as the raw material of the Ba component. Measurement value with a B-type viscometer on this catalyst composition slurry 2 was 700 CPS, and this slurry was coated easily on the honeycomb-type structure by the wash coat method.

After that, the catalyst composition slurry 7 was produced by using barium hydroxide instead of BaSO4 in the above catalyst composition slurry 2 to compare change of viscosity thereof and coating easiness by the wash coat method. Viscosity of the catalyst composition slurry using barium hydroxide was 3000 CPS. Therefore, although coating on the honeycomb-type structure was tried using this catalyst composition slurry 7 by the wash coat method, coating to whole inside of the honeycomb-type structure was impossible due to high viscosity. Similar result was obtained also when barium acetate was used instead of BaSO4. In order to decrease viscosity of such high viscosity slurry, amount of water was increased, however, it decreased amount of the catalyst which can be coated per one time by the wash coat, and required multiple times of wash coats to coat amount of the catalyst necessary.

In this way, by using BaSO4, viscosity of high viscosity catalyst composition slurry with high solid content, or slurry using a material, which results in increasing viscosity, can be decreased to a large degree. By using the catalyst composition slurry having high solid content, a large amount of the catalyst composition can be coated by one time operation of the wash coat method. The honeycomb structure-type catalyst having high amount of the catalyst composition tends to enhance purification performance of exhaust gas, and by using BaSO4 as the Ba component of the catalyst composition slurry, such a high performance catalyst can be produced efficiently.

### = The honeycomb-type structure =

- Material: made of cordierite
- Size: 25.4 ϕ × 50 [mm] (volume: 25 cc)
- Cell density: 139.5 cell/cm² (900 cell /inch²)
- Thickness of cell wall: 0.06 mm (2.5 mil)

### = Drying and firing conditions =

- Drying temperature: 150°C
- Firing furnace: a gas furnace
- Firing temperature: 500°C
- Firing time: 2 hours.

### = Durability conditions =

- Furnace for the durability: an electric furnace
- Temperature: 950°C
- Durability test time: 6 hours
- Durability test atmosphere: 10% H₂O, air atmosphere

**Table 1**

| (Composition Table) | | |
|---|---|---|
| | Composition of components | |
| Example 1 | Upper layer | ∘ Catalyst composition slurry-2 Pd (5)/[γ-alumina (30)], Ce/Zr (B) (15), BaSO₄ (10) |
| | Lower layer | ∘ Catalyst .composition slurry-1 Rh (0.5)/[Ce/Zr (A) (80)],γ-alumina (40) |
| Ref. Example 2 | Upper layer | ∘ Catalyst composition slurry-2 Pd (5)/[γ-alumina (30)], Ce/Zr (B) (15), BaSO4 (10) |
| | Lower layer | ∘ Catalyst composition slurry-4 Rh (0.5)/[Ce/Zr (A) (80)], BaSO₄ (10),γ-alumina (30) |
| Example 3 | Upper layer | ∘ Catalyst composition slurry-3 Pd (5)/[γ-alumina (30)], Ce/Zr (B) (15), γ-alumina (10) |
| | Lower layer | ∘ Catalyst composition slurry-4 Rh (0.5)/[Ce/Zr (A) (80)], BaSO₄ (10),γ-alumina (30) |
| Example 4 | Upper layer | ∘ Catalyst composition slurry-2 Pd (5)/[γ-alumina (30)], Ce/Zr (B) (15), BaSO₄ (10) |
| | Lower layer | ∘ Catalyst composition slurry-5 Rh (0.5)/[Ce/Zr (C) (80)],γ-alumina (40) |
| | Upper | ∘ Catalyst composition slurry-2 |
| Example 5 | layer | Pd (5)/[γ-alumina (30)], Ce/Zr (B) (15), BaSO₄ (10) |
| | Lower layer | ∘ Catalyst composition slurry-6 Rh (0.5)/[Ce/Zr (B) (80)],γ-alumina (40) |

### (Example 1, Reference Example 2), (Comparative Examples 1 to 3)

On the honeycomb structure-type catalysts obtained above, purification performance of HC, CO and NOx was measured on T50 and purification rate under the following conditions. Example 1 and Ref. Example 2 of Table 1 (Composition Table) correspond to Example 1 and Reference Example 2, and Example 3 to Example 5 correspond to Comparative Examples 1 to 3.

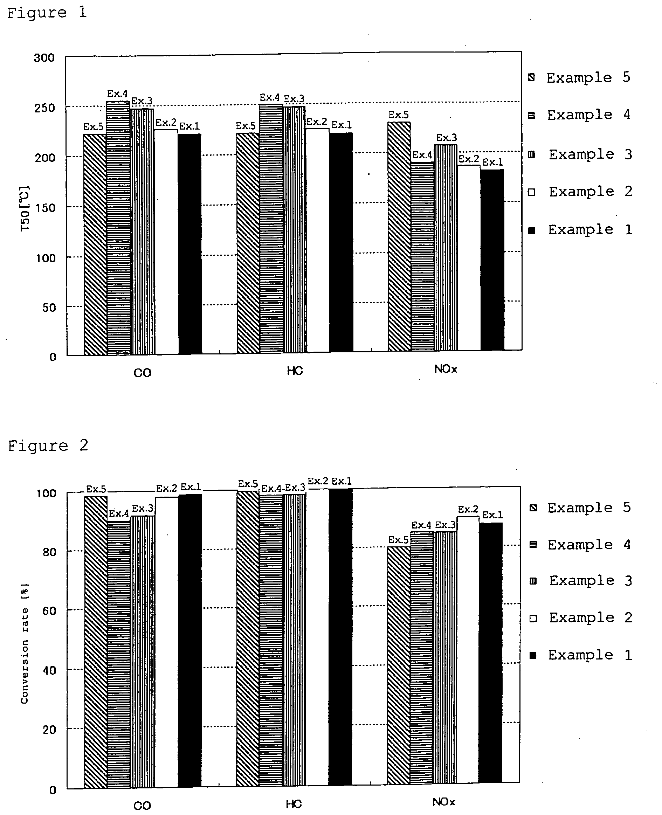

T50 indicates temperature for attaining 50% of conversion performance in components for the catalyst to purify, and has been known widely by those skilled in the art as an index showing a light-off temperature (performance). The light-off temperature is temperature at which purification capability of HC, CO and NOx in the catalyst begins to function. The fact that the light-off temperature is low, shows that purification capability is exerted from low temperature, and performance as the catalyst is high; and the light-off temperature is high, shows that purification capability as the catalyst is low. In addition, purification rate is conversion rate of the components to be purified. Results of T50 are shown in Figure 1, and results of purification rate are shown in Figure 2.

### = Gas composition =

- CO: 0.5%
- C₃H₆: 1200 ppm
- CH₄: 500 ppm
- NO: 500 ppm
- O₂: 0.5%
- CO₂: 14%
- H₂: 0.17%
- H₂O: 10%
- The balance: N₂

### = Evaluation conditions =

Test temperature: from room temperature to 400°C
Temperature increasing rate: 30°C / minute
Flow rate: 36.3 L/minute
Space velocity (SV) : 86000 h⁻¹

As is clear from Figure 1 and Figure 2, because the catalyst of Example 1, which is an Example of the present invention, contains the Pd component along with the Ba component in the upper layer, comprehensively superior purification performance for HC, CO and NOx is exerted. It seems that Reference Example 2 is superior to Example 1 in conversion rate of NOx, however, it is considered because the Ba component contained in the lower layer is acting in an auxiliary way for purification of NOx. Reference Example 2, which is a catalyst having a large amount of the Ba component, is somewhat inferior to Example 1 in view of T50 (temperature is increased). It is considered that this is brought about by alloying of the Rh component by the Ba component.

Example 3, which is a catalyst for comparison, does not contain the Ba component in the upper layer, and contains the Ba component in the lower layer, and is thus inferior in purification performance of NOx. It is considered that this is brought about by alloying of the Ba component and the Rh component, and purification performance of NOx by the Rh component is not exerted sufficiently. In addition, Example 3 is inferior also in purification performance of HC or CO, and it is considered that this is brought about by absence of the Ba component, resulting in sintering of the Pd component, decreasing effective surface area in the Pd component, thus decreasing purification performance of HC or CO.

Example 4, which is a catalyst for comparison, is one where Ce / Zr (C) of the cerium-zirconium-type composite oxide having decreased amount of the Ce component is used as the base material of the Rh component in the lower layer. In this case, it is considered that decrease in the Ce component decreases capability for buffering oxygen concentration of exhaust gas at the vicinity of the Rh component, shortens "stoichiometric" time for promoting purification of NOx by the Rh component, and decreases purification performance of NOx. In addition, in Example 4, also purification performance of HC or CO is decreased. It is considered that this is brought about by decreased amount of the Ce component in the base material of the Rh component, resulting in decrease in oxygen storage and discharge capability by an interaction of the Rh component and the Ce component. Example 5, which is a catalyst for comparison, is one where Ce / Zr (C) of the cerium-zirconium-type composite oxide having increased amount of the Ce component is used as the base material of the Rh component in the lower layer. In this case, although purification performance of HC or CO is the same as in Examples, purification performance of NOx is decreased. It is considered that this is brought about by increased amount of the Ce component in the base material of the Rh component, resulting in not promoting the steam reforming reaction sufficiently. In addition, because many Rh components are supported on the "Ceria" in the OSC, oxygen discharge is promoted, and new NOx is generated by reaction of nitrogen components in exhaust gas and active oxygen, or oxygen concentration in exhaust gas increases, resulting in not making atmosphere suitable for reducing NOx.

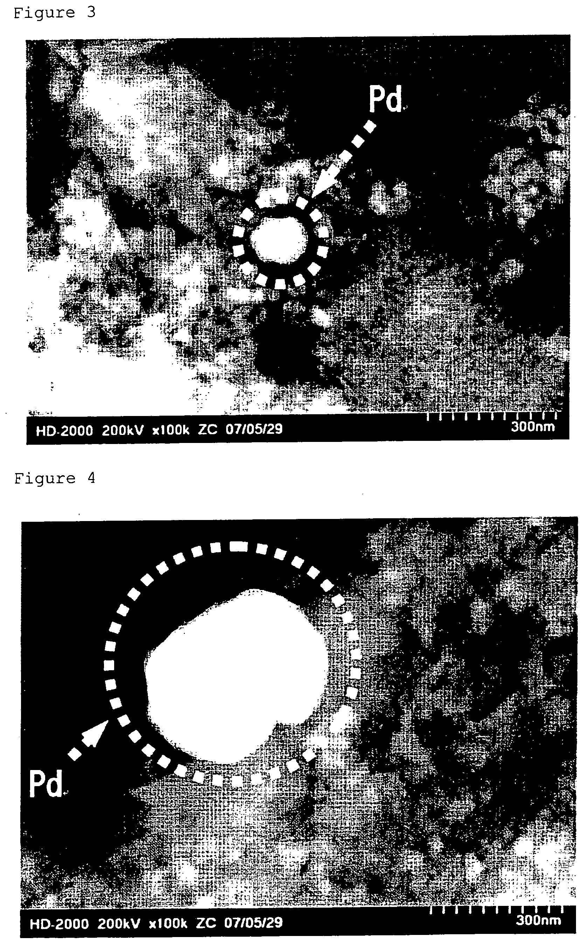

Explanation will be given next on coarsening of particles of the Pd component, with reference to Figure 3 and Figure 4. On the catalyst composition slurry 2 and the catalyst composition slurry 3, change of particles of the Pd component after the durability test was observed. The observation was performed using a STEM (Scanning Transmission Electron Microscope). A STEM Photograph of Pd after the durability test of the q7 2 is "Figure 3", and a STEM Photograph of Pd after the durability test of the q7 3 is "Figure 4".

Both of the catalyst composition slurry 2 and the catalyst composition slurry 3 have a good dispersion state of the Pd component before the durability test, and presence of Pd particles could not be confirmed in the STEM Photograph, however, after the durability test, in both of the catalyst composition slurry 2 and the catalyst composition slurry 3, presence of Pd particles was abled to be confirmed.

As the Photographs show, in the catalyst composition slurry 3 not containing the Ba component, significant growth of the Pd particles was observed, as compared with the catalyst composition slurry 2 containing the Ba component. In the Pd component with the particles grown to a giant size, surface area decreases. The Pd particle with decreased surface area in this way exhibits decrease in active surface area in the catalytic reaction, and this fact corresponds to difference of purification performance in Examples and Comparative Examples.

### (Comparative Example 4)

In addition, a honeycomb structure-type catalyst was prepared by replacing the upper layer and the lower layer in Example 1. A production method of the catalyst and conditions of the durability test were the same as in Example 1. Catalyst compositions are shown in the following Table 2 (Example 6).

**Table 2**

| | Composition of components | |
|---|---|---|
| Example 6 | Upper layer | ∘ Catalyst composition slurry-1 Rh (0.5)/[Ce/Zr (A) (80)],γ-alumina (40) |
| | Lower layer | ∘ Catalyst composition slurry-2 Pd (5)/[γ-alumina (30)], Ce/Zr (B) (15), BaSO₄ (10) |

Next, on Comparative Example 4 and Example 1, an evaluation test by an FTP mode was performed. Exhaustion results of exhaust gas components are shown in Figure 5. The vertical-axis in Figure 5 represents exhaustion amount of each component in exhaust gas per running distance [g/mile]. In addition, THC of the horizontal-axis represents "total hydrocarbon" and NMHC represents "non-methane hydrocarbon". It should be noted that, as for CO (carbon monoxide), amount was expressed by 1/10 amount. From these results, it is understood that the honeycomb structure-type catalyst having "the upper layer / Rh, the lower layer/ Pd", as in Comparative Example 4, shows more exhaustion amount of toxic components as compared with the honeycomb structure-type catalyst having "the upper layer / Pd, the lower layer/ Rh" of Example 1.

It should be noted that, in the similar evaluation test by the FTP mode, it has been confirmed that Comparative Example 4 is inferior in performance to Comparative Examples 1 to 3.

The honeycomb structure-type catalyst of the present invention can be used for purification of exhaust gas exhausted from a combustion engine using fossil fuel, such as a gasoline engine, a diesel engine as well as a gas turbine or the like.

## Claims

1. A honeycomb structure-type catalyst having a carrier made of a honeycomb-type structure, coated with a catalyst composition in two layers, for purifying a carbon monoxide, a hydrocarbon and a nitrogen oxide contained in exhaust gas, **characterized in that**;
a catalyst layer (A) at the upper layer side comprises a palladium component supported on a heat resistant inorganic oxide, an oxygen storage release material and a barium component,
and a catalyst layer (B) at the lower layer side comprises a rhodium component supported on a cerium-zirconium-type composite oxide having a cerium/zirconium ratio of weight of 0.05 to 0.2, as converted to cerium oxide CeO₂ and zirconium oxide ZrO₂,
wherein the heat resistant inorganic oxide of the catalyst layer (A) at the upper layer side is selected from γ-alumina or γ-alumina added with lanthanum,
wherein the oxygen storage release material in the upper layer side (A) is a cerium-zirconium-type composite oxide having higher content of cerium as compared with the lower layer, and
wherein the barium component and the palladium component are not contained in the catalyst layer (B) at the lower layer side, and the rhodium component is not contained in the catalyst layer (A) at the upper layer side.

2. The honeycomb structure-type catalyst according to claim 1, **characterized in that** content of the palladium component is 0.1 to 30 [g/L] per unit volume of the honeycomb-type structure.

3. The honeycomb structure-type catalyst according to claim 1, **characterized in that** content of the barium component is 0.1 to 50 [g/L] per unit volume of the honeycomb-type structure, in an oxide equivalent.

4. The honeycomb structure-type catalyst according to claim 1, **characterized in that**, in the catalyst layer (B) at the lower layer side, the cerium-zirconium-type composite oxide is contained in 5 to 150 [g/L] per unit volume of the honeycomb-type structure.

5. The honeycomb structure-type catalyst according to claim 1, **characterized in that** content of the rhodium component is 0.01 to 5 [g/L] per unit volume of the honeycomb-type structure.

6. A method for producing the honeycomb structure-type catalyst according to any one of claims 1 to 5, comprising coating the catalyst composition in two layers onto the carrier made of the honeycomb-type structure by the wash coat method, **characterized in that** the catalyst layer (B) at the lower layer side is formed by coating catalyst composition slurry containing the cerium-zirconium-type composite oxide having a cerium/zirconium ratio by weight of 0.05 to 0.2, as converted to cerium oxide CeO₂ and zirconium oxide ZrO₂, supported with the rhodium component onto the honeycomb-type structure, subsequently the catalyst layer (A) at the upper layer side is formed by coating catalyst composition slurry, containing the heat resistant inorganic oxide supported with the palladium component, the oxygen storage release material and the barium component, onto the honeycomb-type structure, followed by firing.

7. The method for producing the honeycomb structure-type catalyst according to claim 6, **characterized in that** the barium component in the catalyst composition slurry is mainly composed of barium sulfate.

8. A method for purifying exhaust gas, **characterized in that** a carbon monoxide, a hydrocarbon and a nitrogen oxide contained in exhaust gas are purified by contacting exhaust gas exhausted from an automobile with the honeycomb structure-type catalyst according to any one of claims 1 to 5.

9. The method for purifying exhaust gas according to claim 8, **characterized in that** the automobile uses gasoline as fuel.

## Patentansprüche

1. Wabenstrukturartiger Katalysator mit einem Träger, hergestellt aus einer wabenartigen Struktur, beschichtet in zwei Schichten mit einer Katalysatorzusammensetzung, zur Reinigung eines Kohlenmonoxids, eines Kohlenwasserstoffs und eines Stickstoffoxids, die im Abgas enthalten sind, **dadurch gekennzeichnet, dass**;
eine Katalysatorschicht (A) auf der Oberschichtseite eine Palladiumkomponente, die auf einem wärmebeständigen anorganischen Oxid geträgert ist, ein Sauerstoffspeicherabgabematerial und eine Bariumkomponente umfasst,
und eine Katalysatorschicht (B) auf der Unterschichtseite eine Rhodiumkomponente umfasst, die auf einem Cer-Zirconiumartigen Verbundoxid geträgert ist, das ein Gewichtsverhältnis von Cer/Zirconium, umgerechnet in Ceroxid CeO₂ und Zirconiumoxid ZrO₂, von 0,05 bis 0,2 aufweist,
wobei das wärmebeständige anorganische Oxid von der Katalysatorschicht (A) auf der Oberschichtseite aus γ-Aluminiumoxid oder γ-Aluminiumoxid mit zugegebenem Lanthan ausgewählt ist,
wobei das Sauerstoffspeicherabgabematerial in der Oberschichtseite (A) ein Cer-Zirconiumartiges Verbundoxid ist, das einen höheren Anteil an Cer aufweist, als verglichen mit der Unterschicht, und
wobei die Bariumkomponente und die Palladiumkomponente nicht in der Katalysatorschicht (B) auf der Unterschichtseite enthalten sind und die Rhodiumkomponente nicht in der Katalysatorschicht (A) auf der Oberschichtseite enthalten ist.

2. Wabenstrukturartiger Katalysator nach Anspruch 1, **dadurch gekennzeichnet, dass** der Anteil von der Palladiumkomponente 0,1 bis 30 [g/L] pro Volumeneinheit der wabenartigen Struktur beträgt.

3. Wabenstrukturartiger Katalysator nach Anspruch 1, **dadurch gekennzeichnet, dass** der Anteil von der Bariumkomponente, in einem Oxidäquivalent, 0,1 bis 50 [g/L] pro Volumeneinheit der wabenartigen Struktur beträgt.

4. Wabenstrukturartiger Katalysator nach Anspruch 1, **dadurch gekennzeichnet, dass** in der Katalysatorschicht (B) auf der Unterschichtseite das Cer-Zirconiumartige Verbundoxid in 5 bis 150 [g/L] pro Volumeneinheit der wabenartigen Struktur enthalten ist.

5. Wabenstrukturartiger Katalysator nach Anspruch 1, **dadurch gekennzeichnet, dass** der Anteil von der Rhodiumkomponente 0,01 bis 5 [g/L] pro Volumeneinheit der wabenartigen Struktur beträgt.

6. Verfahren zur Herstellung des wabenstrukturartigen Katalysators nach einem der Ansprüche 1 bis 5, umfassend das Beschichten der Katalysatorzusammensetzung in zwei Schichten auf den Träger, der aus der wabenartigen Struktur hergestellt ist, durch das Washcoat-Verfahren, **dadurch gekennzeichnet, dass** die Katalysatorschicht (B) auf der Unterschichtseite durch das Beschichten einer Katalysatorzusammensetzungsaufschlämmung, enthaltend das Cer-Zirconiumartige Verbundoxid, das ein Gewichtsverhältnis von Cer/Zirconium, umgerechnet in Ceroxid CeO₂ und Zirconiumoxid ZrO₂, von 0,05 bis 0,2 aufweist, geträgert mit der Rhodiumkomponente, auf die wabenartige Struktur hergestellt wird, anschließend die Katalysatorschicht (A) auf der Oberschichtseite durch das Beschichten einer Katalysatorzusammensetzungsaufschlämmung, enthaltend das wärmebeständige anorganische Oxid geträgert mit der Palladiumkomponente, das Sauerstoffspeicherabgabematerial und die Bariumkomponente, auf die wabenartige Struktur hergestellt wird, gefolgt vom Brennen.

7. Verfahren zur Herstellung des wabenstrukturartigen Katalysators nach Anspruch 6, **dadurch gekennzeichnet, dass** die Bariumkomponente in der Katalysatorzusammensetzungsaufschlämmung überwiegend aus Bariumsulfat zusammengesetzt ist.

8. Verfahren zur Abgasreinigung, **dadurch gekennzeichnet, dass** ein Kohlenmonoxid, ein Kohlenwasserstoff und ein Stickstoffoxid, die im Abgas enthalten sind, gereinigt werden durch das Inkontaktbringen des Abgases, das von einem Fahrzeug entweicht, mit dem wabenstrukturartigen Katalysator nach einem der Ansprüche 1 bis 5.

9. Verfahren zur Abgasreinigung nach Anspruch 8, **dadurch gekennzeichnet, dass** das Fahrzeug Benzin als Treibstoff verwendet.

## Revendications

1. Catalyseur de type structure en nid d'abeilles, ayant un support composé d'une structure de type nid d'abeilles, revêtu d'une composition catalytique bicouche, pour la purification du monoxyde de carbone, d'un hydrocarbure et d'un oxyde d'azote présents dans un gaz d'échappement,
**caractérisé en ce que**
une couche catalytique (A) sur la face supérieure de la bicouche comprend un composé du palladium supporté sur un oxyde inorganique résistant à la chaleur, un matériau de stockage/libération d'oxygène et un composé du baryum,
et une couche catalytique (B) sur la face inférieure de la bicouche comprend un composé du rhodium supporté sur un oxyde composite de type cérium-zirconium ayant un rapport pondéral cérium/zirconium allant de 0,05 à 0,2, converti en oxyde de cérium CeO₂ et oxyde de zirconium ZrO₂, où l'oxyde inorganique résistant à la chaleur de la couche catalytique (A) sur la face supérieure de la bicouche est choisi parmi la γ-alumine ou la γ-alumine avec du lanthane,
où le matériau de stockage/libération d'oxygène dans la couche supérieure (A) est un oxyde composite de type cérium-zirconium, ayant une teneur plus élevée en cérium par comparaison à la couche inférieure, et
où le composé du baryum et le composé du palladium ne sont pas présents dans la couche catalytique (B) sur la face inférieure de la bicouche, et le composé du rhodium n'est pas présent dans la couche catalytique (A) sur le côté supérieur de la bicouche.

2. Catalyseur de type structure en nid d'abeilles selon la revendication 1, **caractérisé en ce que** la teneur en composé du palladium se situe dans l'intervalle allant de 0,1 à 30 (g/l) par unité de volume de la structure de type nid d'abeilles.

3. Catalyseur de type structure en nid d'abeilles selon la revendication 1, **caractérisé en ce que** la teneur en composé du baryum se situe dans l'intervalle allant de 0,1 à 50 (g/l) par unité de volume de la structure de type nid d'abeilles, en équivalent d'oxyde.

4. Catalyseur de type structure en nid d'abeilles selon la revendication 1, **caractérisé en ce que** dans la couche catalytique (B) sur la face inférieure de la bicouche, la teneur de l'oxyde composite de type cérium-zirconium se situe dans l'intervalle allant de 5 à 150 (g/l) par unité de volume de la structure de type nid d'abeilles.

5. Catalyseur de type structure en nid d'abeilles selon la revendication 1, **caractérisé en ce que** la teneur en composé du rhodium se situe dans l'intervalle allant de 0,01 à 5 (g/l) par unité de volume de la structure de type nid d'abeilles.

6. Procédé de production du catalyseur de type structure en nid d'abeilles selon l'une quelconque des revendications 1 à 5, comprenant le revêtement de la composition catalytique en deux couches sur le support constitué de la structure de type nid d'abeilles par le procédé d'imprégnation de type « wash coat », **caractérisé en ce que** la couche catalytique (B) sur la face inférieure de la bicouche est formée par revêtement d'une suspension de composition catalytique contenant l'oxyde composite de type cérium-zirconium ayant un rapport pondéral cérium/zirconium allant de 0,05 à 0,2, converti en oxyde de cérium CeO₂ et oxyde de zirconium ZrO₂, supporté avec le composé du rhodium sur la structure de type nid d'abeille, puis la couche catalytique (A) sur la face supérieure de la bicouche est formée par revêtement d'une suspension de composition catalytique, contenant l'oxyde inorganique résistant à la chaleur supporté avec le composé du palladium, le matériau de stockage/libération d'oxygène et le composé du baryum, sur la structure de type nid d'abeilles, suivie du chauffage.

7. Procédé de production du catalyseur de type structure en nid d'abeilles selon la revendication 6, **caractérisé en ce que** le composé du baryum dans la suspension de composition catalytique est composé essentiellement de sulfate de baryum.

8. Procédé de purification d'un gaz d'échappement, **caractérisé en ce que** le monoxyde de carbone, un hydrocarbure et un oxyde d'azote présents dans un gaz d'échappement sont purifiés par contact du gaz d'échappement produit par une automobile avec le catalyseur de type structure en nid d'abeilles selon l'une quelconque des revendications 1 à 5.

9. Procédé de purification d'un gaz d'échappement selon la revendication 8, **caractérisé en ce que** l'automobile utilise de l'essence comme carburant.
